# EUROPÄISCHE PATENTSCHRIFT

(11) **EP 2 500 212 B1**
(45) Veröffentlichungstag und Bekanntmachung des Hinweises auf die Patenterteilung: **08.06.2016**
(21) Anmeldenummer: 12001620.9
(22) Anmeldetag: 08.03.2012
(51) Int. Cl.: B60N 2/16, B60N 2/00

(54) **Höhenverstellbarer Fahrzeugsitz**
Height-adjustable vehicle seat
Siège de véhicule réglable en hauteur

(30) Priorität: 18.03.2011 DE 102011014524
(43) Veröffentlichungstag der Anmeldung: 19.09.2012
(73) Patentinhaber: Johnson Controls GmbH, 51399 Burscheid (DE)
(72) Erfinder: Lee, Glen, 50829 Köln (DE); Schreier, Johann, Dr., 52078 Aachen (DE)
(74) Vertreter: Wolff, Felix

(56) Entgegenhaltungen:
- EP-A1- 1 468 870
- EP-A1- 1 652 724
- EP-A2- 1 533 176
- DE-A1- 3 046 886
- DE-C1- 10 146 530

## Beschreibung

Die vorliegende Erfindung betrifft einen Fahrzeugsitz mit einem Sitzteil und einer Rückenlehne, der höhenverstellbar vorgesehen ist.

Derartige Fahrzeugsitze sind aus dem Stand der Technik bekannt und weisen ein Sitzteil und eine Rückenlehne auf. Die Fahrzeugsitze können einer oder mehreren Personen Platz bieten. Bei dem erfindungsgemäßen Fahrzeugsitz kann es sich folglich auch um eine Sitzbank handeln. Zwischen dem Sitzteil und der Fahrzeugkarosserie ist eine Mechanik vorgesehen, mit der der Fahrzeugsitz, insbesondere zur Anpassung des Fahrzeugsitzes an die Physionomie des jeweiligen Sitzinsassen, höhenverstellbar vorgesehen ist. Um beispielsweise dem Sitzinsassen das Verstellen des Fahrzeugsitzes, insbesondere von einer tieferen in eine höhere Position, zu erleichtern, aber auch um beispielsweise Klappergeräusche zu vermeiden, weist die Mechanik in der Regel eine Feder auf, die den Fahrzeugsitz in eine angehobene Stellung vorspannt. Bei Fahrzeugsitzen gemäß dem Stand der Technik ist jedoch nachteilig, dass diese Feder weder für den unbesetzten Sitz noch für den mit einem Fahrzeuginsassen besetzten Fahrzeugsitz optimal ausgelegt ist.

Die DE10146530 zeigt einen Fahrzeugsitz mit den Merkmalen des Oberbegriffs des Anspruchs 1.

Es war deshalb die Aufgabe der vorliegenden Erfindung, einen Fahrzeugsitz zur Verfügung zu stellen, der die Nachteile des Standes der Technik nicht aufweist.

Gelöst wird die Aufgabe durch einen Fahrzeugsitz mit den Merkmalen des Anspruchs 1. Für den Fall, dass der Fahrzeugsitz unbelastet ist, weist dieses Federmittel eine geringere Federkraft auf als bei einem mit einem Sitzinsassen besetzten Fahrzeugsitz.

Vorzugweise erfolgt die Verstellung selbsttätig. Der erfindungsgemäße Fahrzeugsitz weist einen Belegungssensor auf, der feststellt, ob der Fahrzeugsitz mit einem Sitzinsassen belegt ist oder nicht. Erfindungsgemäß ermittelt der Belegungssensor auch noch eine Gewichtsgröße, mit der das Sitzteil belegt ist und aufgrund dieses Signals wird die Federkraft eingestellt. Die Gewichtsgröße wird, in der Regel, nicht dem Gewicht des Sitzinsassen entsprechen.

Bei einer nicht erfindungsgemäßen Ausführung handelt es sich bei dem Belegungssensor um einen elektronischen Sensor, der ein Signal an eine Fahrzeugsteuerung abgibt, die wiederum die Federkraft entsprechend der Belegungssituation einstellt.

Bei dem erfindungsgemäßen Bewegungssensor handelt es sich auch um ein mechanisches Element, das direkt oder indirekt mit dem Federelement zusammenwirkt und die Feder entsprechend vorspannt. Diese Ausführungsform der vorliegenden Erfindung hat insbesondere den Vorteil, dass die Vorspannung der Feder an das Gewicht des Sitzinsassen angepasst werden kann. Insbesondere steigt dabei die Federkraft, vorzugsweise proportional, zu dem Gewicht des jeweiligen Sitzinsassen an. Diese bevorzugte Ausführungsform der vorliegenden Erfindung hat sowohl Sicherheits- als auch Komfortvorteile.

Erfindungsgemäß handelt es sich bei dem Federelement um eine Torsionsfeder.

Im Folgenden wird die Erfindung anhand der Figuren 1 - 3 erläutert. Diese Erläuterungen sind lediglich beispielhaft und schränken den allgemeinen Erfindungsgedanken nicht ein.
Figur 1 zeigt einen Fahrzeugsitz gemäß dem Stand der Technik.
Figur 2 zeigt den erfindungsgemäßen Fahrzeugsitz im unbesetzten Zustand.
Figur 3 zeigt den erfindungsgemäßen Fahrzeugsitz im besetzten Zustand.

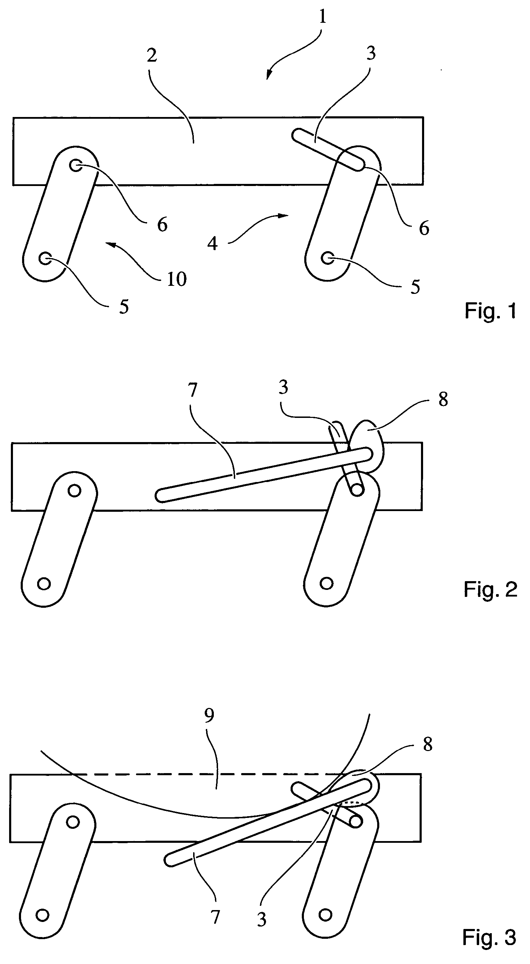

Figur 1 zeigt einen Fahrzeugsitz 1 gemäß dem Stand der Technik. Dieser weist ein Sitzteil 2 und eine nicht dargestellte Rückenlehne auf, die vorzugsweise drehbar an dem Sitzteil vorgesehen ist. Zwischen dem Sitzteil 2 und dem Boden der Karosserie (nicht dargestellt) des Fahrzeuges ist eine Höhenverstellmechanik vorgesehen, die in dem vorliegenden Fall jeweils zwei Hebelarme 4, 10 auf beiden Seiten des Fahrzeugsitzes aufweist, die jeweils in Drehpunkten 5, 6 drehbar an der Fahrzeugkarosserie beziehungsweise an dem Fahrzeugsitz vorgesehen sind. Durch eine Drehung gegen den Uhrzeigersinn wird der Fahrzeugsitz angehoben und durch eine Drehung im Uhrzeigersinn abgesenkt. Ein Hebelarm, in dem vorliegenden Fall der hintere Hebelarm 4, ist mit einem Ende eines Federelementes 3 verbunden, dessen anderes Ende an dem Sitzteil 2 vorgesehen ist. Bei dem Federelement handelt es sich um eine Torsionsfeder. Dieses Federelement spannt den Fahrzeugsitz in seine angehobene Stellung vor.

Figur 2 zeigt den Fahrzeugsitz gemäß Figur 1, der jedoch bei diesem Beispiel erfindungsgemäß ausgestaltet ist. Der erfindungsgemäße Fahrzeugsitz weist einen Belegungssensor 7 auf, der in dem vorliegenden Fall drehfest mit einem Federvorspannmittel 8, hier einer drehbar vorgesehenen Nocke, verbunden ist, die mit dem Federelement 3 zusammenwirkt, das in dem vorliegenden Fall an dem Federelement 3 anliegt. Durch eine Drehung der Nocke gegen den Uhrzeigersinn wird das Federelement gespannt und dadurch die Federkraft erhöht. Die Erhöhung der Federkraft ist direkt und/oder indirekt proportional zu dem Drehwinkel der Nocke. Eine Drehung der Nocke im Uhrzeigersinn hat den umgekehrten Effekt.

Wird der Sitz nun, wie in Figur 3 dargestellt, von einem Sitzinsassen 9 belegt, drückt dessen Gesäß den Belegungssensor 7 gegen den Uhrzeigersinn nach unten. Dadurch wird ebenfalls die Nocke 8 gegen den Uhrzeigersinn verdreht und verdreht dadurch ebenfalls ein Federmittel, das in dem vorliegenden Fall als Torsionsfeder gestaltet ist. Dadurch wird die Federkraft, die den Fahrzeugsitz in seine gehobene Stellung verbringen bzw. dort halten möchte, erhöht. Möchte der Sitzinsasse nun den Fahrzeugsitz weiter anheben, erfolgt dies leichter bzw. wenn er den Fahrzeugsitz absenken möchte, erfolgt dies weniger abrupt als bei Fahrzeugsitzen gemäß dem Stand der Technik. Der Fachmann erkennt, dass in dem vorliegenden Fall der Belegungssensor umso weiter gegen den Uhrzeigersinn verdreht wird, je schwerer der Sitzinsasse 9 ist. Dadurch ist der erfindungsgemäße Fahrzeugsitz in dem vorliegenden Fall bezüglich des Gewichts des Sitzinsassen selbstadaptierend. Je höher das Gewicht des Fahrzeugsitzinsassen ist, desto stärker wird das Federelement 3 vorgespannt und umgekehrt. Die Federkraft kann auch in diesem Fall beispielsweise durch ein Federspannmittel 8 und eine damit zusammenwirkende Nocke (8) eingestellt werden.

### Bezugszeichenliste:

- 1: Fahrzeugsitz
- 2: Sitzteil
- 3: Federelement, Torsionsfeder
- 4: hinterer Hebelarm
- 5: Drehpunkt
- 6: Drehpunkt
- 7: Belegungssensor
- 8: Vorspannmittel, Nocke
- 9: Sitzinsasse
- 10: vorderer Hebelarm

## Patentansprüche

1. Fahrzeugsitz (1) mit einem Sitzteil (2) und einer Rückenlehne, wobei das Sitzteil höhenverstellbar ist und mit einem Federelement (3) in eine angehobene Stellung vorgespannt ist, wobei die Federkraft des Federelements (3) einstellbar vorgesehen ist, wobei der Fahrzeugsitz (1) einen Belegungssensor (7) aufweist, der feststellt, ob das Sitzteil (2) belegt ist oder nicht und mit welcher Gewichtskraft das Sitzteil (2) belegt ist, wobei der Belegungssensor (7) ein Hebel ist, der mit dem Federelement (3) zusammenwirkt, **dadurch gekennzeichnet, dass** das Federelement (3) als Torsionsfeder vorgesehen ist.

2. Fahrzeugsitz nach Anspruch 1, **dadurch gekennzeichnet, dass** sich die Federkraft selbstadaptierend aufgrund des Gewichts des Sitzinsassen (9) einstellt.

## Claims

1. Vehicle seat (1) with a seat part (2) and a backrest, wherein the seat part is height-adjustable and is pretensioned by a spring element (3) into a raised position, wherein the spring force of the spring element (3) is provided so as to be adjustable, wherein the vehicle seat (1) has an occupation sensor (7) which determines whether the seat part (2) is or is not occupied and with what weight the seat part (2) is occupied, wherein the occupation sensor (7) is a lever which interacts with the spring element (3), **characterized in that** the spring element (3) is provided in the form of a torsion spring.

2. Vehicle seat according to Claim 1, **characterized in that** the spring force is adjusted in a self-adapting manner by the weight of the seat occupant (9).

## Revendications

1. Siège de véhicule (1) comprenant une partie de siège (2) et un dossier, la partie de siège étant réglable en hauteur et étant précontrainte par un élément de ressort (3) dans une position relevée, la force de ressort de l'élément de ressort (3) étant prévue de manière à pouvoir être ajustée, le siège de véhicule (1) présentant un capteur d'occupation (7) déterminant si la partie de siège (2) est occupée ou pas et avec quel poids la partie de siège (2) est chargée, le capteur d'occupation (7) étant un levier qui coopère avec l'élément de ressort (3), **caractérisé en ce que** l'élément de ressort (3) est prévu sous forme de ressort de torsion.

2. Siège de véhicule selon la revendication 1, **caractérisé en ce que** la force de ressort s'ajuste de manière auto-adaptative sur la base du poids de l'occupant du siège (9).
